# EUROPEAN PATENT APPLICATION

(11) **EP 4 813 745 A1**
(43) Date of publication of application: **30.09.2026**
(21) Application number: 26164284.7
(22) Date of filing: 12.03.2026
(51) Int. Cl.: B60Q 1/14

(54) **VEHICLE LAMP CONTROL DEVICE, CONTROL METHOD FOR VEHICLE LAMP CONTROL DEVICE, AND PROGRAM**

(30) Priority: 26.03.2025 JP 2025051561
(71) Applicant: Toyota Jidosha Kabushiki Kaisha, Toyota-shi, Aichi-ken 471-8571 (JP)
(72) Inventor: IKUTA, Tetsuya, Toyota-shi, 471-8571 (JP); NOMURA, Takuya, Toyota-shi, 471-8571 (JP); KAWAMURA, Kazuki, Toyota-shi, 471-8571 (JP)
(74) Representative: J A Kemp LLP

(57) **Abstract**

A vehicle lamp control device (100) that controls a headlight (3) of a vehicle (M) includes a pedestrian detection unit (11) configured to detect a pedestrian (P1, P2) in front of the vehicle, and a lamp control unit (12) configured to perform dimming control on a pedestrian irradiation range in which the pedestrian is present within an irradiation range (D), when the pedestrian detected by the pedestrian detection unit is located within a preset irradiation range with respect to the headlight. The lamp control unit controls the headlight such that a light amount irradiated to the pedestrian irradiation range of the pedestrian becomes substantially uniform even if a position of the pedestrian relative to the vehicle within the irradiation range changes in a lateral direction of the vehicle.

## Description

### CROSS-REFERENCE TO RELATED APPLICATIONS

This application is based upon and claims the benefit of priority from Japanese Patent Application No. 2025-051561, filed on March 26, 2025, the entire contents of which are incorporated herein by reference.

### TECHNICAL FIELD

The present disclosure relates to a vehicle lamp control device, a control method for a vehicle lamp control device, and a program.

### BACKGROUND

As a technical document related to a vehicle lamp control device, Japanese Unexamined Patent Application Publication No. 2019-127080 is known in the related art. This publication discloses a control lamp device that, when a pedestrian in front of a vehicle is detected, performs dimming control on irradiation light to a head region of the detected pedestrian.

### SUMMARY

Incidentally, a headlight of a vehicle is configured such that a light amount is high in a portion close to a front direction of the vehicle, and the light amount decreases as a distance from the front increases in a lateral direction. A related art control lamp device dims irradiation light to a head region of a pedestrian by a constant ratio from an original light amount, and therefore the light amount of the irradiation light that reaches the pedestrian changes significantly due to movement of the pedestrian or the vehicle. For this reason, there was a risk of causing a pedestrian approaching the front of the vehicle to feel glare, or a risk of reducing the light amount to an extent that it becomes difficult for a camera of the vehicle or a driver to recognize the pedestrian.

One aspect of the present disclosure is a vehicle lamp control device that controls a headlight of a vehicle. The vehicle lamp control device includes: a pedestrian detection unit configured to detect a pedestrian in front of the vehicle; and a lamp control unit configured to perform dimming control on a pedestrian irradiation range in which the pedestrian is present within an irradiation range, when the pedestrian detected by the pedestrian detection unit is located within a preset irradiation range with respect to the headlight. The lamp control unit controls the headlight such that a light amount irradiated to the pedestrian irradiation range of the pedestrian becomes substantially uniform even if a position of the pedestrian relative to the vehicle within the irradiation range changes in a lateral direction.

According to the vehicle lamp control device according to one aspect of the present disclosure, even if a pedestrian moves in a lateral direction within an irradiation range of a headlight, a light amount irradiated to a pedestrian irradiation range is maintained at a substantially uniform value, and therefore, compared to a related art device, it is possible to suppress fluctuations in the light amount of the headlight irradiated to the pedestrian crossing in front of the vehicle. Hereby, it is possible to suppress causing a pedestrian to feel glare or causing discomfort due to large fluctuations in the light amount of the headlight irradiated to the pedestrian crossing in front of the vehicle.

In the vehicle lamp control device according to one aspect of the present disclosure, the headlight may have a plurality of irradiation units. The lamp control unit may control the headlight such that a light amount irradiated to the pedestrian irradiation range of the pedestrian becomes substantially uniform even if a position of the pedestrian changes in a lateral direction, by switching a light distribution pattern of an irradiation unit corresponding to the pedestrian irradiation range among the plurality of irradiation units to a preset light distribution pattern for pedestrian dimming.

In the vehicle lamp control device according to one aspect of the present disclosure, the lamp control unit may control the headlight such that a light amount irradiated to the pedestrian in the pedestrian irradiation range becomes substantially uniform even if a position of the pedestrian relative to the vehicle within the irradiation range changes in a longitudinal direction of the vehicle.

In the vehicle lamp control device according to one aspect of the present disclosure, the lamp control unit may control the headlight such that, when a vehicle speed of the vehicle is equal to or greater than a low speed threshold value and less than a high speed threshold value, a light amount irradiated to the pedestrian irradiation range of a pedestrian becomes higher as the vehicle speed of the vehicle is higher, and may not perform dimming control for the pedestrian when the vehicle speed of the vehicle is equal to or greater than the high speed threshold value.

Another aspect of the present disclosure is a control method for a vehicle lamp control device that controls a headlight of a vehicle. This control method for a vehicle lamp control device includes: a detection step of detecting a pedestrian in front of the vehicle; and a dimming control step of performing dimming control on a pedestrian irradiation range in which the pedestrian is present within an irradiation range, when the pedestrian is located within a preset irradiation range with respect to the headlight. In the dimming control step, the headlight is controlled such that a light amount irradiated to the pedestrian irradiation range of the pedestrian becomes substantially uniform even if a position of the pedestrian relative to the vehicle within the irradiation range changes in a lateral direction.

According to the control method for a vehicle lamp control device according to another aspect of the present disclosure, even if a pedestrian moves in a lateral direction within an irradiation range of a headlight, a light amount irradiated to a pedestrian irradiation range is maintained at a substantially uniform value, and therefore, compared to a related art device, it is possible to suppress fluctuations in the light amount of the headlight irradiated to the pedestrian crossing in front of the vehicle. Hereby, it is possible to suppress causing a pedestrian to feel glare or causing discomfort due to large fluctuations in the light amount of the headlight irradiated to the pedestrian crossing in front of the vehicle.

Still another aspect of the present disclosure is a program that causes an ECU of a vehicle to operate so as to control a headlight of the vehicle. This program may cause the ECU to operate as: a pedestrian detection unit configured to detect a pedestrian in front of the vehicle; and a lamp control unit configured to perform dimming control on a pedestrian irradiation range in which the pedestrian is present within an irradiation range, when the pedestrian detected by the pedestrian detection unit is located within a preset irradiation range with respect to a headlight, and may cause the lamp control unit to control the headlight such that a light amount irradiated to the pedestrian irradiation range of the pedestrian becomes substantially uniform even if a position of the pedestrian relative to the vehicle within the irradiation range changes in a lateral direction.

According to the program according to still another aspect of the present disclosure, even if a pedestrian moves in a lateral direction within an irradiation range of a headlight, a light amount irradiated to a pedestrian irradiation range is maintained at a substantially uniform value, and therefore, compared to a related art device, it is possible to suppress fluctuations in the light amount of the headlight irradiated to the pedestrian crossing in front of the vehicle. Hereby, it is possible to suppress causing a pedestrian to feel glare or distracting the pedestrian and causing discomfort due to large fluctuations in the light amount of the headlight irradiated to the pedestrian crossing in front of the vehicle.

According to each aspect of the present disclosure, it is possible to suppress causing a pedestrian to feel glare or distracting the pedestrian and causing discomfort due to large fluctuations in the light amount of a headlight irradiated to the pedestrian crossing in front of a vehicle.

### BRIEF DESCRIPTION OF THE DRAWINGS

FIG. 1 is a block diagram illustrating a vehicle lamp control device according to an embodiment.
FIG. 2 is a diagram for explaining a state in which a light amount of irradiation light from a headlight is made substantially uniform with respect to a lateral movement of a pedestrian.
FIG. 3 is a flowchart illustrating an example of control processing of the vehicle lamp control device.

### DETAILED DESCRIPTION

Hereinafter, embodiments of the present disclosure will be described with reference to the drawings.

### [Configuration of Vehicle Lamp Control Device]

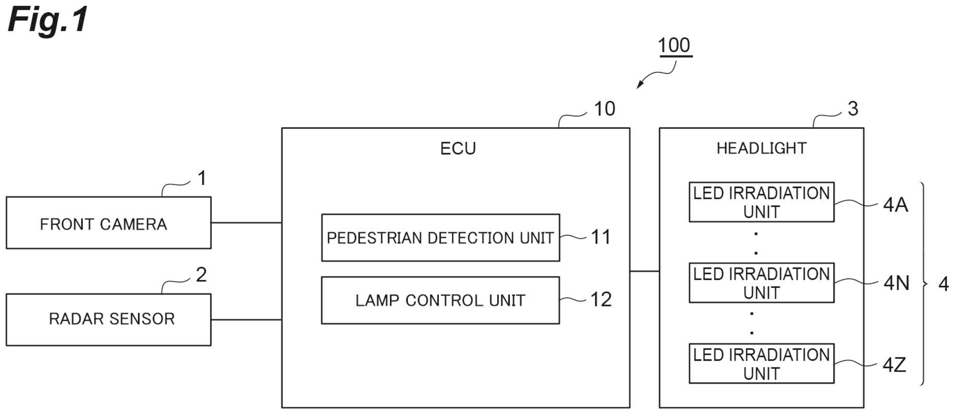

FIG. 1 is a block diagram illustrating a vehicle lamp control device 100 according to an embodiment. The vehicle lamp control device 100 illustrated in FIG. 1 is a device that performs dimming control to control a light amount of irradiation by a headlight 3 of a vehicle for a pedestrian detected in front of the vehicle.

The vehicle lamp control device 100 controls a light amount of irradiation light for a pedestrian by an ADB (Adaptive Driving Beam). The ADB divides an area covered by each irradiation unit (for example, an LED irradiation unit) into fine zones based on sensor data from a front camera 1, a radar sensor 2, and the like, and specifies a range where a pedestrian is present (a pedestrian irradiation range). Due to this zone division, the ADB departs from a conventional uniform irradiation method and can finely adjust a light output for each zone. Note that the vehicle lamp control device 100 does not necessarily need to adopt the ADB, and it is sufficient as long as it can execute control of the light amount by specifying the range where the pedestrian is present.

As illustrated in FIG. 1, the vehicle lamp control device 100 is provided with an ECU (Electronic Control Unit) 10. The ECU 10 is an electronic control unit having a central processing unit (CPU) and a storage unit. The storage unit is composed of, for example, a read only memory (ROM), a random-access memory (RAM), an Electrically Erasable Programmable Read-Only Memory (EEPROM), and the like. In the ECU 10, for example, various functions are realized by a CPU executing a program stored in the storage unit. The ECU 10 may be composed of a plurality of electronic units, or may be a part of another ECU.

The ECU 10 is connected to a front camera 1, a radar sensor 2, and a headlight 3. The front camera 1 is an imaging device that captures an external situation of the vehicle. The front camera 1 is provided, for example, on a back side of a windshield of the vehicle and captures an image of a front of the vehicle. The front camera 1 transmits a captured image related to the external situation of the vehicle to the ECU 10.

The radar sensor 2 is a detection device that detects an object around the vehicle using radio waves (for example, millimeter waves) or light. The radar sensor 2 can include, for example, a millimeter wave radar or a LiDAR (Light Detection and Ranging). The radar sensor 2 transmits information on the detected object to the ECU 10.

The headlight 3 is a lamp device that functions as a headlight of the vehicle. The headlight 3 is configured by being integrated with a plurality of LED irradiation units 4A to 4Z and auxiliary optical components such as an optical lens and a reflector that are linked thereto. The LED irradiation units 4A to 4Z can be, for example, micro LEDs or matrix LEDs. The number of the LED irradiation units 4A to 4Z is not limited. The headlight 3 is configured to be able to individually control these plurality of LED irradiation units 4A to 4Z. Note that the irradiation unit is not limited to an LED as long as it is appropriate as a light source to be individually controlled.

A pedestrian detection unit 11 has a function of determining whether a pedestrian is present in front of the vehicle based on video and detection data received from the front camera 1 or the radar sensor 2. The pedestrian detection unit 11 is configured to detect with high accuracy the presence or absence of a pedestrian present in front of the vehicle and position information thereof (for example, offset in a lateral direction and a longitudinal direction or distance information with respect to the vehicle) by making full use of, for example, an image processing algorithm or a signal processing technology.

As a specific example, the pedestrian detection unit 11 applies an advanced image analysis technology including deep learning to video data acquired from the front camera 1 and identifies a human silhouette or a motion pattern, thereby realizing detection and tracking of a pedestrian. At the same time, by combining distance measurement information from the radar sensor 2, stable pedestrian detection becomes possible even with changes in weather or lighting conditions. The pedestrian detection unit 11 may calculate the position information of the pedestrian by other known technical methods.

When a plurality of pedestrians overlap as viewed from the vehicle, the pedestrian detection unit 11 calculates position information of a pedestrian closest to the vehicle as viewed from the vehicle. Alternatively, the pedestrian detection unit 11 may calculate position information of all overlapping pedestrians as viewed from the vehicle. The pedestrian detection unit 11 may acquire information on a direction of a pedestrian's face or information on a moving speed in addition to the position information of the pedestrian.

A lamp control unit 12 has a function of executing dimming control for a pedestrian based on information transmitted from the pedestrian detection unit 11. The lamp control unit 12 dynamically adjusts a light amount and a light distribution pattern of each of the LED irradiation units 4A to 4Z of the headlight 3. The lamp control unit 12 performs dimming control on a pedestrian irradiation range in which a pedestrian is present when the pedestrian is located within a preset irradiation range with respect to the headlight 3. The irradiation range is a range to which the dimming control for pedestrians of the headlight 3 by the vehicle lamp control device 100 is applied. The irradiation range does not need to be fan-shaped, and may be rectangular or the like. The irradiation range may be a target range of dimming control for pedestrians in a known ADB technology.

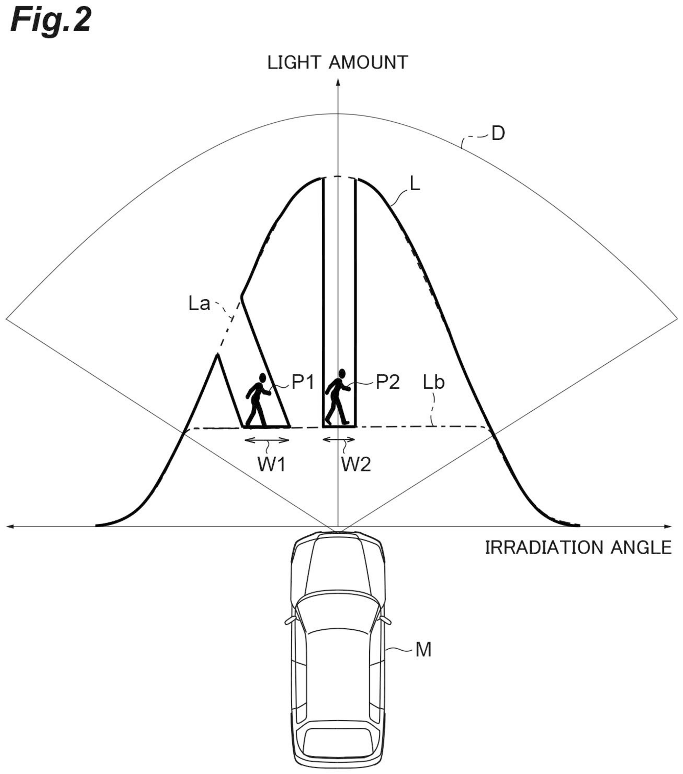

Here, FIG. 2 is a diagram for explaining a state in which a light amount of irradiation light from a headlight is made substantially uniform with respect to a lateral movement of a pedestrian. FIG. 2 illustrates a vehicle M, an irradiation range D, a first pedestrian P1, a second pedestrian P2, a first pedestrian irradiation range W1, and a second pedestrian irradiation range W2. FIG. 2 illustrates a situation where, for example, the vehicle M with the headlight 3 turned on is stopped before a pedestrian crossing, and the first pedestrian P1 and the second pedestrian P2 are walking on the pedestrian crossing. The first pedestrian P1 and the second pedestrian P2 have the same position in a longitudinal direction of the vehicle M, and only their positions in a lateral direction of the vehicle M are different. Specifically, the second pedestrian P2 is located closer to the front of the vehicle compared to the first pedestrian P1.

Further, FIG. 2 shows a graph in which a horizontal axis represents an irradiation angle and a vertical axis represents a light amount. The graph shows a light amount La of a reference light distribution pattern, a light amount Lb of a light distribution pattern for pedestrian dimming, and an actual light amount L considering the first pedestrian P1 and the second pedestrian P2.

The reference light distribution pattern is a light distribution pattern applied to each of the LED irradiation units 4A to 4Z of the headlight 3 when a dimming target such as a pedestrian is not present. In the reference light distribution pattern, light is irradiated such that a light amount becomes higher as a position is closer to a front direction of the vehicle. The light distribution pattern for pedestrian dimming is a light distribution pattern applied to an LED irradiation unit corresponding to a pedestrian irradiation range among the LED irradiation units 4A to 4Z when a pedestrian is present. In the light distribution pattern for pedestrian dimming, light is irradiated such that a light amount irradiated to the pedestrian irradiation range of the pedestrian becomes substantially uniform even if a position of the pedestrian relative to the vehicle within the irradiation range D changes in a lateral direction. Here, "substantially uniform" is not limited to a case where a value is physically completely constant, but means that a fluctuation in the light amount with respect to a moving distance in the lateral direction of the vehicle falls within a predetermined range that does not cause discomfort or a sudden change in glare to the pedestrian. The predetermined range may be, for example, within ±20% with respect to a reference value (an average value or a maximum value), or may be within ±15%, within ±10%, or within ±5%. Further, "substantially uniform" is a concept including a stepwise change in light amount caused by switching or dimming of the plurality of LED irradiation units 4A to 4Z, and minute pulsations (ripples) in light distribution characteristics. Note that the "light amount" in the present embodiment is an index including either or both of illuminance (1x) at a position of the pedestrian (for example, at a height of eyes of the pedestrian) and luminous intensity (cd) irradiated from the headlight 3 toward the pedestrian. The illuminance when light strikes the pedestrian can be calculated by a known method according to a distance and an angle from the vehicle, and a luminous intensity distribution of the headlight 3.

In the situation illustrated in FIG. 2, in a related art device, since a light from a reference light distribution pattern is dimmed by a constant ratio for a pedestrian, there was a large difference between a light amount of light irradiated to the first pedestrian P1 and a light amount of light irradiated to the second pedestrian P2. When a pedestrian crosses in front of the vehicle M with the headlight 3 turned on, a light amount of irradiated light fluctuates according to a lateral distance from the vehicle M, and therefore, depending on the person, there is a risk of feeling glare from the light of the headlight 3. In addition, there is also a risk that a pedestrian may feel discomfort that the light of the headlight 3 becomes stronger as the pedestrian approaches the front of the vehicle M.

In contrast, the lamp control unit 12 irradiates light such that a light amount becomes substantially uniform even if a position of a pedestrian changes in a lateral direction in dimming control, whereby fluctuations in the light amount of the light irradiated to the pedestrian are suppressed, and dimming control that considers the pedestrian can be performed.

Specifically, the lamp control unit 12 selects a first pedestrian irradiation range W1 in which a first pedestrian P1 is present from among zones divided for each of the LED irradiation units 4A to 4Z, based on position information of the pedestrian acquired from the pedestrian detection unit 11. The first pedestrian irradiation range W1 may be a combination of a plurality of zones. The lamp control unit 12 specifies an LED irradiation unit 4D corresponding to the first pedestrian irradiation range W1 among the LED irradiation units 4A to 4Z. A plurality of LED irradiation units corresponding to the first pedestrian irradiation range W1 may exist. The lamp control unit 12 performs dimming control for the first pedestrian P1 by switching a light distribution pattern of the LED irradiation unit 4D from a reference light distribution pattern to a light distribution pattern for pedestrian dimming. The LED irradiation unit 4D is linked with auxiliary optical components such as an optical lens and a reflector, and realizes adjustment of an irradiation angle and uniform distribution of light by a control signal from the lamp control unit 12.

Similarly, the lamp control unit 12 determines a second pedestrian irradiation range W2 in which a second pedestrian P2 is present from among the zones, and specifies an LED irradiation unit 4N corresponding to the second pedestrian irradiation range W2. The lamp control unit 12 performs dimming control for the second pedestrian P2 by switching a light distribution pattern of the LED irradiation unit 4N from the reference light distribution pattern to the light distribution pattern for pedestrian dimming.

In this way, since the lamp control unit 12 switches the light distribution patterns of the LED irradiation unit 4D corresponding to the first pedestrian irradiation range W1 and the LED irradiation unit 4N corresponding to the second pedestrian irradiation range W2 from the reference light distribution pattern to the light distribution pattern for pedestrian dimming, fluctuations in the light amount of light irradiated to the first pedestrian P1 and the light amount of light irradiated to the second pedestrian P2 are suppressed, compared to a related art device that only dims light from the reference light distribution pattern by a constant ratio. For this reason, it is avoided that the light amount of light irradiated from the headlight 3 of the vehicle M fluctuates significantly when the first pedestrian P1 walks to the position of the second pedestrian P2. In addition, when the lamp control unit 12 performs control using one type of preset light distribution pattern for pedestrian dimming other than the reference light distribution pattern, it is possible to realize highly reliable dimming control while reducing a control load and cost of the entire system.

The lamp control unit 12 may be in an aspect of controlling the headlight 3 such that a light amount irradiated to the pedestrian in the pedestrian irradiation range becomes substantially uniform even if a position of the pedestrian relative to the vehicle within the irradiation range D changes in a longitudinal direction of the vehicle. The definition of substantially uniform can be the same as that for a change in the lateral direction of the vehicle.

The lamp control unit 12 may prepare in advance a plurality of types of light distribution patterns for pedestrian dimming according to a distance in the longitudinal direction. The lamp control unit 12 controls the LED irradiation units 4A to 4Z of the headlight 3 such that an irradiated light amount becomes substantially uniform even if a position of a pedestrian in the longitudinal direction changes, by switching the light distribution pattern for pedestrian dimming based on a distance in the longitudinal direction between the pedestrian and the vehicle.

The plurality of types of light distribution patterns for pedestrian dimming are preset so as to correct a deviation in illuminance caused by normal output characteristics when a relative position of a pedestrian changes in a longitudinal direction with respect to the vehicle. The plurality of types of light distribution patterns for pedestrian dimming may be set such that a light amount at the time of irradiation changes curvilinearly with respect to a distance, in consideration of a light attenuation characteristic that is inversely proportional to a square of the distance. A plurality of types of light distribution patterns for pedestrian dimming corresponding to the distance may be set such that a light amount at the time of irradiation is proportional to a square of the distance, compared to a light amount of a reference light distribution pattern for pedestrian dimming.

Specifically, when a distance in the longitudinal direction between the vehicle and a pedestrian is less than a first distance threshold value (for example, 100 m), the lamp control unit 12 uses a default first light distribution pattern for pedestrian dimming. Then, when the distance in the longitudinal direction between the vehicle and the pedestrian is equal to or greater than the first distance threshold value and less than a second distance threshold value (for example, 200 m), the lamp control unit 12 uses a second light distribution pattern for pedestrian dimming that provides a light amount of about four times that of the first light distribution pattern for pedestrian dimming. In order to ensure uniformity of the light amount when irradiated to the pedestrian, the light distribution pattern for pedestrian dimming may be switched stepwise at finer distances. The lamp control unit 12 may be in an aspect of not performing dimming control when the distance in the longitudinal direction between the vehicle and the pedestrian is equal to or greater than the second distance threshold value, because it is highly likely not to cause the pedestrian to feel glare. In this case, the reference light distribution pattern is used.

Note that the lamp control unit 12 does not necessarily need to use a light distribution pattern. The lamp control unit 12 may realize control to maintain uniformity of a light amount by finely controlling the LED irradiation units 4A to 4Z corresponding to a pedestrian irradiation range based on a position of a pedestrian with respect to the vehicle (for example, a lateral offset and a longitudinal offset with respect to the vehicle). Specifically, the lamp control unit 12 may be in an aspect of calculating an output illuminance for achieving a substantially uniform light amount regardless of the position of a pedestrian within the irradiation range D by changing an LED output stepwise or continuously based on a lateral offset and a longitudinal offset of the pedestrian with respect to the vehicle, taking into account a light attenuation characteristic due to a positional relationship between the vehicle and the pedestrian, and outputting a command to an LED irradiation unit corresponding to a pedestrian irradiation range among the LED irradiation units 4A to 4Z.

The lamp control unit 12 may control the LED irradiation units 4A to 4Z in consideration of a speed of the vehicle when the vehicle M with the headlight 3 turned on is traveling. For example, when a vehicle speed is less than a low speed threshold value (for example, 50 km/h), the lamp control unit 12 uses a default first light distribution pattern for pedestrian dimming. For example, when the vehicle speed is equal to or greater than the low speed threshold value and less than a high speed threshold value (for example, 100 km/h), the lamp control unit 12 uses a third light distribution pattern for pedestrian dimming that provides a light amount of about four times that of the first light distribution pattern for pedestrian dimming. An aspect may be adopted in which a plurality of light distribution patterns for pedestrian dimming are set between the first light distribution pattern for pedestrian dimming and the third light distribution pattern for pedestrian dimming. The lamp control unit 12 switches the light distribution pattern stepwise such that a light amount becomes higher as the vehicle speed is higher. When the vehicle is traveling at a high speed with a vehicle speed equal to or greater than the high speed threshold value, the lamp control unit 12 maintains the reference light distribution pattern for the headlight 3 even if a pedestrian is detected, because visibility of a distant object is important for a driver.

The lamp control unit 12 may be in an aspect of continuously adjusting a light amount according to a vehicle speed, instead of switching a light distribution pattern. It is desirable for a driver that visibility increases as a vehicle speed is higher, and it is considered that a pedestrian is less likely to feel glare because the pedestrian passes by in a shorter time as the vehicle speed of the vehicle is higher. For this reason, the lamp control unit 12 may control the LED irradiation units 4A to 4Z such that, when the vehicle speed is equal to or greater than the low speed threshold value and less than the high speed threshold value, a light amount at the time of irradiation for the pedestrian becomes higher as the vehicle speed is higher.

Note that the lamp control unit 12 may be in an aspect of performing abnormality determination by feedback as to whether light of the headlight 3 for a pedestrian is appropriately subjected to dimming control from a captured image of the front camera 1. When the lamp control unit 12 detects an abnormality of the LED irradiation unit 4, such as a case where a light amount of light irradiated to the pedestrian is too high or too low, the lamp control unit 12 promptly cancels the ADB. The lamp control unit 12, for example, analyzes video acquired by the front camera 1 in real time and monitors an actual irradiation status (luminance distribution) of the headlight 3. The lamp control unit 12, for example, quantifies a light output from each of the LED irradiation units 4A to 4Z by an image processing algorithm. When a deviation from a preset reference value exceeds a predetermined threshold value (e.g., ±10%), the lamp control unit 12 immediately determines that it is an abnormal state and cancels the ADB. Hereby, it is possible to promptly detect deterioration of the LED irradiation units 4A to 4Z or non-uniform irradiation due to an external factor.

### [Program]

A program causes the ECU 10 of the vehicle lamp control device 100 to function (operate) as the above-described pedestrian detection unit 11 and lamp control unit 12. The program is provided by, for example, a non-transitory recording medium such as a ROM or a semiconductor memory. In addition, the program may be provided via communication such as a wireless network.

### [Control Method for Vehicle Lamp Control Device]

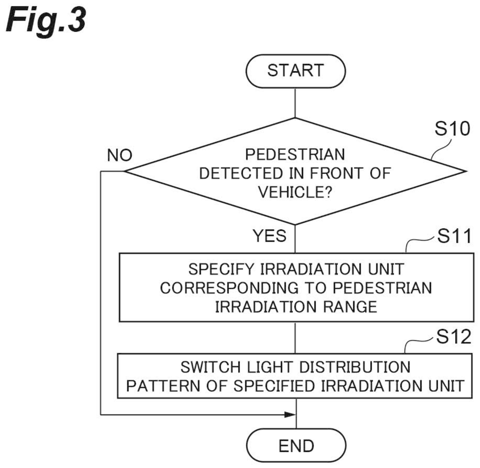

Next, a control method for the vehicle lamp control device 100 according to the present embodiment will be described with reference to the drawings. FIG. 3 is a flowchart illustrating an example of control processing of the vehicle lamp control device 100.

As illustrated in FIG. 3, as step S10, the ECU 10 of the vehicle lamp control device 100 detects a pedestrian in front of the vehicle by the pedestrian detection unit 11 (detection step). The pedestrian detection unit 11 detects whether a pedestrian is present in front of the vehicle using data from the front camera 1 and the radar sensor 2. When a pedestrian is detected (in the case of YES), the ECU 10 proceeds with the control processing to step S11. When no pedestrian is detected (in the case of NO), the ECU 10 ends the control processing.

In step S11, the ECU 10 specifies an LED irradiation unit corresponding to a pedestrian irradiation range by the lamp control unit 12. The lamp control unit 12 specifies an LED irradiation unit corresponding to the pedestrian irradiation range among the plurality of LED irradiation units 4A to 4Z of the headlight 3, based on position information from the pedestrian detection unit 11.

Next, in step S12, the ECU 10 switches a light distribution pattern of the specified LED irradiation unit to a light distribution pattern for pedestrian dimming (dimming control step). The lamp control unit 12 changes the light distribution pattern of the irradiation unit corresponding to the pedestrian irradiation range from a reference light distribution pattern to the light distribution pattern for pedestrian dimming. This light distribution pattern for pedestrian dimming is designed to reduce a light amount for a pedestrian, and is controlled such that a light amount irradiated to a pedestrian irradiation range becomes substantially uniform even if a position of the pedestrian changes in a width direction.

According to the vehicle lamp control device 100 according to the present embodiment described above, even if a pedestrian moves in a lateral direction of the vehicle within an irradiation range of a headlight, a light amount irradiated to a pedestrian irradiation range is maintained at a substantially uniform value, and therefore, compared to a related art device, it is possible to suppress fluctuations in the light amount of the headlight irradiated to the pedestrian crossing in front of the vehicle. Hereby, it is possible to suppress causing a pedestrian to feel glare or distracting the pedestrian and causing discomfort due to large fluctuations in the light amount of the headlight irradiated to the pedestrian crossing in front of the vehicle.

In addition, according to the vehicle lamp control device 100, when control is performed using one type of preset light distribution pattern for pedestrian dimming other than a reference light distribution pattern, it is possible to realize highly reliable dimming control while reducing a control load and cost of the entire system.

Furthermore, according to the vehicle lamp control device 100, even when a position of a pedestrian changes in a longitudinal direction of the vehicle, by keeping a light amount for a pedestrian irradiation range substantially uniform, it is possible to suppress fluctuations in the light amount of a headlight irradiated to a pedestrian whose distance in the longitudinal direction from the vehicle changes, compared to a related art device. Hereby, it is possible to suppress causing a pedestrian to feel glare or distracting the pedestrian and causing discomfort due to large fluctuations in the light amount of the headlight irradiated to the pedestrian whose distance in the longitudinal direction from the vehicle changes.

**In** addition, according to the vehicle lamp control device 100, by controlling the headlight such that, when a vehicle speed of the vehicle is equal to or greater than a low speed threshold value and less than a high speed threshold value, a light amount irradiated to a pedestrian irradiation range of a pedestrian becomes higher as the vehicle speed of the vehicle is higher, it is possible to enhance visibility for a driver while taking into consideration that a time during which the pedestrian feels glare becomes shorter due to a high vehicle speed.

Although the embodiments of the present disclosure have been described above, the present disclosure is not limited to the above-described embodiments. The present disclosure can be implemented in various forms with various changes and improvements made based on the knowledge of a person skilled in the art, including the above-described embodiments.

The headlight 3 does not necessarily need to be configured to include the plurality of LED irradiation units 4A to 4Z. The irradiation unit may be other than an LED, and there is a possibility that a laser diode array, an organic light emitting diode panel, an electroluminescent panel, or the like can be adopted. The headlight 3 does not necessarily need to include a plurality of irradiation units, and any configuration that can control a light amount of a pedestrian irradiation range within an irradiation range D is sufficient.

The vehicle lamp control device 100 may select an optimal irradiation pattern according to vehicle external environmental conditions, in addition to a conventional light distribution pattern for pedestrian dimming. Specifically, the vehicle lamp control device 100 detects weather conditions and visibility conditions around the vehicle through an external sensor group (a temperature sensor, a humidity sensor, a precipitation sensor, a visibility sensor, etc.) equipped on the vehicle M. The preset light distribution patterns for pedestrian dimming include a plurality of light distribution patterns for pedestrian dimming for bad weather corresponding to heavy rain, dense fog, heavy snow, and the like, respectively. The light distribution pattern for pedestrian dimming for bad weather sets a light amount lower than a normal light distribution pattern for pedestrian dimming because light is reflected by rain or snow. The ECU 10 selects a light distribution pattern for pedestrian dimming according to current weather based on sensor data of the external sensors.

## Claims

1. A vehicle lamp control device (100) that controls a headlight (3) of vehicle, the device comprising:
a pedestrian detection unit (11) configured to detect a pedestrian (P1, P2) in front of the vehicle; and
a lamp control unit (12) configured to perform dimming control on a pedestrian irradiation range (W1, W2) in which the pedestrian (P1, P2) is present within a preset irradiation range (D), when the pedestrian (P1, P2) detected by the pedestrian detection unit (11) is located within the preset irradiation range (D) with respect to the headlight (3),
wherein the lamp control unit (12), in the dimming control, controls the headlight (3) such that a light amount irradiated to the pedestrian irradiation range (W1, W2) of the pedestrian (P1, P2) becomes substantially uniform even if a position of the pedestrian (P1, P2) relative to the vehicle within the irradiation range (D) changes in a lateral direction of the vehicle.

2. The vehicle lamp control device (100) according to claim 1, wherein the headlight (3) has a plurality of irradiation units (4A to 4Z), and
the lamp control unit (12) controls the headlight (3) such that a light amount irradiated to the pedestrian irradiation range (W1, W2) of the pedestrian (P1, P2) becomes substantially uniform even if the position of the pedestrian (P1, P2) changes in the lateral direction, by switching a light distribution pattern of the irradiation unit (4D, 4N) corresponding to the pedestrian irradiation range (W1, W2) among the plurality of the irradiation units (4A to 4Z) to a preset light distribution pattern for pedestrian dimming.

3. The vehicle lamp control device (100) according to claim 1, wherein the lamp control unit (12) controls the headlight (3) such that a light amount irradiated to the pedestrian irradiation range (W1, W2) of the pedestrian (P1, P2) becomes substantially uniform even if a position of the pedestrian (P1, P2) relative to the vehicle within the irradiation range (D) changes in a longitudinal direction of the vehicle.

4. The vehicle lamp control device (100) according to claim 1, wherein the lamp control unit (12) controls the headlight (3) such that, when a vehicle speed of the vehicle is equal to or greater than a low speed threshold value and less than a high speed threshold value, a light amount irradiated to the pedestrian irradiation range (W1, W2) of the pedestrian (P1, P2) becomes higher as the vehicle speed of the vehicle is higher, and does not perform the dimming control for the pedestrian (P1, P2) when the vehicle speed of the vehicle is equal to or greater than the high speed threshold value.

5. A control method for a vehicle lamp control device (100) that controls a headlight (3) f a vehicle, the method comprising:
a detection step of detecting a pedestrian (P1, P2) in front of the vehicle; and
a dimming control step of performing dimming control on a pedestrian irradiation range (W1, W2) in which the pedestrian (P1, P2) is present within an irradiation range (D), when the pedestrian (P1, P2) is located within a preset irradiation range (D) with respect to the headlight (3),
wherein in the dimming control step, the headlight (3) is controlled such that a light amount irradiated to the pedestrian irradiation range (W1, W2) of the pedestrian (P1, P2) becomes substantially uniform even if a position of the pedestrian (P1, P2) relative to the vehicle within the irradiation range (D) changes in a lateral direction of the vehicle.

6. A program that causes an ECU (10) of a vehicle to operate so as to control a headlight (3) of the vehicle, the program causing the ECU (10) to operate as:
a pedestrian detection unit (11) configured to detect a pedestrian (P1, P2) in front of the vehicle; and
a lamp control unit (12) configured to perform dimming control on a pedestrian irradiation range (W1, W2) in which the pedestrian (P1, P2) is present within an irradiation range (D), when the pedestrian (P1, P2) detected by the pedestrian detection unit (11) is located within a preset irradiation range (D) with respect to the headlight (3),
and causing the headlight (3) to be controlled, as the dimming control, such that a light amount irradiated to the pedestrian irradiation range (W1, W2) of the pedestrian (P1, P2) becomes substantially uniform even if a position of the pedestrian (P1, P2) relative to the vehicle within the irradiation range (D) changes in a lateral direction of the vehicle.
